# EUROPÄISCHE PATENTSCHRIFT

(11) **EP 2 931 055 B1**
(45) Veröffentlichungstag und Bekanntmachung des Hinweises auf die Patenterteilung: **06.02.2019**
(21) Anmeldenummer: 13826995.6
(22) Anmeldetag: 13.12.2013
(51) Int. Cl.: A23G 1/40, A23G 1/42, A23G 1/46

(54) **KAKAOHALTIGE LEBENSMITTELZUSAMMENSETZUNG**
COCOA-CONTAINING FOOD COMPOSITION
COMPOSITION ALIMENTAIRE CONTENANT DU CACAO

(30) Priorität: 14.12.2012 DE 102012112301
(43) Veröffentlichungstag der Anmeldung: 21.10.2015
(73) Patentinhaber: Hower, Jürgen, 45478 Mülheim an der Ruhr (DE)
(72) Erfinder: Hower, Jürgen, 45478 Mülheim an der Ruhr (DE)
(74) Vertreter: Bungartz Christophersen Partnerschaft mbB Patentanwälte
(86) Internationale Anmeldenummer: PCT/DE2013/100422
(87) Internationale Veröffentlichungsnummer: WO 2014/090230

(56) Entgegenhaltungen:
- EP-A1- 0 531 142
- EP-A1- 1 498 498
- EP-A1- 1 958 514
- WO-A1-2008/007938
- WO-A1-2011/107259
- WO-A1-2012/109324
- WO-A2-2006/063219
- ES-A1- 2 392 404
- US-A- 4 963 372
- US-A1- 2001 022 986
- US-A1- 2007 082 116
- US-A1- 2012 015 076

## Beschreibung

Die vorliegende Erfindung betrifft eine kakaohaltige Lebensmittelzubereitung enthaltend Kakaobestandteile und Milchbestandteile sowie ein Verfahren zu ihrer Herstellung.

Es ist seit langem bekannt, dass Kakao-haltige Milchgetränke und Schokolade sich positiv auf die Gesundheit auswirken. Mehrere Untersuchungen haben für Kakao-Milchen gezeigt, dass sie im Vergleich zu Kohlenhydrat-haltigen Energiegetränken zu einer besseren Erholung des Körpers nach Ausdauersport führen. In einer Cross-over-Studie wurden Marker zur Muskelerholung untersucht. Die randomisierten Probanden erhielten entweder Kakao-Milchen oder Energy-Drinks. Während keine signifikanten Unterschiede in der sportlichen Leistungsfähigkeit nachgewiesen werden konnten, zeigten sich nach intensiver sportlichen Betätigungen geringere Kreatinkinase-Werte unter Kakao-Milchen. In einer weiteren Studie konnten Lunn et al. zeigen, dass nach einem 60-minütigen Ausdauertraining die Gabe von fettarmer Kakaomilch zu einer besseren bioptisch gesicherten muskulären Protein-Resynthese nach 30 und 60 Minuten führt als ein kohlenhydratreiches Energie-Getränk. Die nach Leistungssport-Übungen verabreichten Kakao-Milchen verbesserten in einer weiteren Studie auch die nachfolgenden Übungen mehr als Kohlenhydrat-haltige Getränke und Plazebo. Im Gegensatz zur Kakao-Milch bieten Soft-Drinks keine gesundheitlichen Vorteile. Eine observationale Studie über Soft-Drinks und die die Ergebnisse aus der amerikanischen NHANES-Studie haben gezeigt, dass die mit Soft-Drinks verbunden Zuckeraufnahme mit erhöhten Harnsäurespiegeln und einem erhöhten Blutdruck assoziiert ist.

Die Kakao-Bohne enthält besonders hohe Konzentrationen an Flavanolen, überwiegend Epicatechine, die ebenfalls mit einer positiven Wirkung auf die Gesundheit assoziiert werden. Für Flavanole, eine Unterklasse der Flavonoide, die den Polyphenolen zugeordnet werden, konnte in vielen Studien gezeigt werden, dass sie einen positiven Einfluss auf die vaskulären und Endothelfunktionen und damit auf die Gesundheit der Gefäße besitzen.

In einer Vielzahl von klinischen Studien an Erwachsenen haben sich Hinweise für einen positiven Einfluss von Kakao-Polyphenolen (Flavanole) auf das Herzkreislaufsystem, den Blutdruck, das Angiotensin-Converting-Enzyme-System, die NO-Produktion, die Insulinresistenz, auf eine anti-inflammatorische Wirkung, die Psyche und die kognitive Leistungsfähigkeit ergeben. Der Einfluss der Kakao-Flavanole auf die Endothelin-abhängige Vasodilation wurde aktuell in einem Gutachten der EFSA (European Food Safety Authority, July 13, 2012, 10(7): 2809) bestätigt. Der Konsum von mit normaler Kuhmilch hergestellter Schokolade ist epidemiologisch invers mit der Prävalenz koronarer Herzerkrankungen korreliert.

Im Rahmen der Entwicklung von Säuglings- und Kindermilchen wurde Kuhmilch den humanen Bedingungen unterschiedlicher Altersgruppen angepasst, ohne bisher die biologische Komplexität der Muttermilch erreicht zu haben. Kuhmilchen wurden mit Prä- und Probiotika, Mikronährstoffen, Vitaminen und ungesättigten Fettsäuren angereichert, um im Darm ein der Muttermilch vergleichbares Mikrobiom zu fördern. Der positive Einfluss von Prä- und Probiotika ist nicht auf das Säuglings- und Kleinkindalter beschränkt, wie epidemiologische Untersuchungen zeigen.

Präbiotika können als komplexe Zucker (Galacto- und Fructo-Oligosaccharide) und Probiotika als lebende Mikroorganismen Säuglingen, Kindern und Erwachsenen über eine Supplementierung zugeführt werden. Präbiotika sind Oligosaccharide, die sich durch ihre ßglykosidische Bindung der humanen enzymatischen Verdauung entziehen und von probiotischen Keimen fermentiert werden müssen. Präbiotika induzieren das Wachstum der probiotischen Darmbakterien wie die unterschiedlichen humanen Milch-Oligosaccharide.

Die probiotische Darmflora, die überwiegend aus Lactobacillus bifidus besteht, moduliert die Immunität und trägt zur körperlichen Gesundheit und zum Schutz vor Infektionen bei Säuglingen, Kindern und Erwachsenen bei. Gestillte Säuglinge verdauen mit Hilfe ihrer Darmflora Lactose, produzieren Milchsäure und Essigsäuren und scheiden deshalb im Gegensatz zu prä- und probiotisch nicht supplementierten Flaschenkindern auch einen sauren Stuhl aus. In diesem sauren mikrobiellen Umfeld wird das Wachstum von anderen, den Magen-Darm-Trakt schädigenden Erregern unterdrückt.

Schokolade ist ein beliebtes kakaohaltiges Lebens- und Genussmittel, das von Kindern wie Erwachsenen gleichermaßen verzehrt wird. Lange Zeit war Zielsetzung seitens der Produzenten von Schokolade, dieses Produkt breiten Bevölkerungsteilen zur Verfügung zu stellen, wobei großer Wert auf die Verarbeitbarkeit der Schokoladenmassen und weniger auf ihren ernährungsphysiologischen Wert gelegt wurde.

Aus dem Stand der Technik sind einige Zubereitungen bekannt, die sich mit präbiotischen oder hyperallergenen Kakaozubereitungen befassen. So ist aus der WO 2008/007938 A1 eine präbiotische Schokolade bekannt, die ein Gemisch aus Kakaokomponenten, Milchkomponenten (skim milk powder, Full cream powder), Emulgatoren, Geschmacksstoffen und Süßstoffen enthält, worin die beiden präbiotisch wirkenden Süßstoffe 19 bis 34 Gew.-% Inulin und 5 bis 8 Gew.-% Isomalt enthalten. Als Milchkomponenten werden handelsübliche Milchpulver auf Basis von fettarmer Milch und Vollmilch verwendet.

US 4,963,372 offenbart eine hyperallergene Schokolade mit einem hohen Nährstoffgehalt, die im Wesentlichen aus Kakaobutter, Rohrzucker, Lecithin, Milchfett und einem Proteinhydrolysat hypoallergener Aminosäuren besteht, wobei wesentliche Aminosäuren wie Glutaminsäure, Asparaginsäure, Arginin, Cystein, Glycin, Prolin unnd Serin explizit ausgeschlossen sind. Ein weiteres hypoallergenes Milchprodukt aus natürlichen und/oder synthetischen Komponenten ist aus der EP 0 531 142 A1 bekannt. Dieses Milchprodukt kann eine hypoallergene Milchschokolade sein und enthält eine Mineralsalzkomponente, eine Kohlenhydratkomponente und eine Proteinkomponente, wobei die Mineralsalzkomponente ein Gemisch aus Mineralsalzen enthält, dass dem Mineralsalzgehalt in natürlicher Milch ähnlich ist. Die Kohlenhydratkomponente und die Proteinkomponente sind im Gehalt allergener Proteine und Kohlenhydrate reduziert.

Eine Compound-Schokolade als Nahrungsergänzungsmittel ist aus der WO 2011/107259 bekannt. Es wird eine eine Schokoladenzubereitung offenbart, die als funktionelle Inhaltsstoffe Vitamin C, Vitamin E, Zink, Kupfer und gegebenenfalls ein Xanthophyll enthält. Die Milchkomponente wird in Form von Vollmilchpulver zugefügt.
Der vorliegenden Erfindung lag demgemäß die Aufgabe zugrunde, eine kakaohaltige Lebensmittelzubereitung, insbesondere in Form von Milchschokolade oder dunkler Schokolade, zur Verfügung zu stellen, die die Vorteile der Kakaobohne sowie die Wirkungen von bestimmten Milchbestandteilen in sich vereint.

Gegenstand der vorliegenden Erfindung ist demgemäß eine kakaohaltige Lebensmittelzubereitung, die Kakaobestandteile und Bestandteile von Formulamilch enthält und die dadurch gekennzeichnet ist, gekennzeichnet, dass
die Kohlenhydrate in einer Menge von 40 bis 60 Gew.-%, bezogen auf die Trockensubstanz der Formulamilch, enthalten sind,
Proteine in einer Menge ≤ 20 Gew.-%, bezogen auf die Trockensubstanz der Formulamilch, enthalten sind, und die Formulamilch einen Fettgehalt zwischen 15 und 25 Gew.-%, bezogen auf die Trockensubstanz der Formulamilch, aufweist.

Die Lebensmittelzubereitung gemäß der vorliegenden Erfindung kombiniert die Eigenschaften der Kakaobestandteile und der Milch in einem solchen Umfang, dass die Schokolade auch ohne Bedenken nicht nur Kleinkindern, sondern allen Altersklassen ohne Bedenken angeboten werden kann.

Die erfindungsgemäße Lebensmittelzubereitung liegt vorzugsweise als Milchschokolade, dunkle Schokolade oder Compound-Schokolade vor, insbesondere in Form einer Tafel, eines Riegels, von Konfekt oder Bonbons.

Formulamilch ist eine Milchzubereitung auf Basis von Kuhmilch, die in ihrer Zusammensetzung variiert werden kann, um so die ernährungsphysiologischen Bedürfnisse unterschiedlicher Altersgruppen Genüge zu tun. Für Säuglinge wurde versucht, die Zusammensetzung an die Muttermilch anzupassen. Im Rahmen der vorliegenden Erfindung wird zur Herstellung der kakaohaltigen Lebensmittelzubereitung eine Kinder-Formulamilch vorzugsweise in Form von Milchpulver eingesetzt. Die nachfolgenden Angaben zu den Inhaltsstoffen der Formulamilch beziehen sich, soweit es nicht anders angegeben ist, jeweils auf die Trockensubstanz der Formulamilch.

Im Rahmen der vorliegenden Erfindung wird vorzugsweise eine Formula-Milch eingesetzt, die in ihren Inhaltsstoffen entsprechend den Empfehlungen der zuständigen Gesundheitsbehörden mit Vitaminen, Spurenelementen, ungesättigten Fettsäuren, Prä- oder Probiotika und/oder Ballaststoffen angereichert ist.

Die erfindungsgemäß eingesetzte Formulamilch enthält Kohlenhydrate in einer Menge von 40 bis 60 Gew.-%, bezogen auf die Trockensubstanz der Formulamilch. Die Kohlenhydrate sind üblicherweise ausgewählt aus Mono- und Disacchariden, wobei der Gehalt an Lactose mindestens 80 Gew.-%, bezogen auf den Gehalt an Kohlenhydraten, beträgt. Neben der Lactose können als weitere Kohlenhydrate Maltose, Trihalose, Maltodextrin, modifizierte Stärke, Amylosestärke, sowie Stärkederivate, die sich beispielsweise von Tapiokastärke, Maisstärke, Getreidestärke, Kartoffelstärke usw. ableiten, eingesetzt werden. Als Monosaccharide können Sucrose, Galactose, Glucose, Fructose, Mannose, Ribose oder Gemische davon eingesetzt werden. Auch die Verwendung von Oligosacchariden wie Raffinose, Stachyose, Verbascose sowie Fructans können in geringen Mengen eingearbeitet werden.

In einer weiteren Ausgestaltung der vorliegenden Erfindung enthält die Formulamilch Proteine, deren Gehalt 20 Gew.-%, insbesondere 15 Gew.-%, bezogen auf den Trockengehalt der Formulamilch, nicht überschreitet. Der Proteingehalt liegt erfindungsgemäß zwischen 10 Gew.-% und 15 Gew.-% bezogen auf den Trockengehalt der Formulamilch. Als Eiweißsubstanzen werden üblicherweise Proteinkomponenten aus der Kuhmilch eingesetzt.

Als weitere Inhaltsstoffe enthält die verwendete Formulamilch vorzgusweise Fettbestandteile. Der Fettgehalt der Formulamilch sollte 30 Gew.-%, vorzugsweise 25 Gew.-%, bezogen auf die Trockensubstanz, nicht überschreiten. Wertgelegt werden sollte dafür aber auf eine gute Fettqualität. Vorzugsweise enthält die verwendete Formulamilch gesättigte, einfach ungesättigte und mehrfach ungesättigte Fettsäuren. Vorzugsweise beträgt der Fettgehalt von 15 Gew.-% bis 25 Gew.-%, bezogen auf die Trockensubstanz. Eine Steigerung der Qualität wird dadurch erreicht, wenn die Fettkomponente als mehrfach ungesättigte Fettsäuren Omega-3- und Omega-6-Fettsäuren enthält. Der Anteil der Omega-3-Fettsäuren beträgt vorzugsweise von 0,1 bis 1,5 Gew.-%, insbesondere von 0,5 bis 1,5 Gew.-%, bezogen auf die Fettkomponente.

Als weitere Bestandteile kann die Formulamilch Vitamine ausgewählt aus den Vitaminen A, D, E, B2, B6, B12, K und Folsäure, Pantothensäure, Biotin, Niacin, Cholin und Inositol enthalten, wobei die einzelnen Vitamine in folgenden Mengen, jeweils bezogen auf 1 g Formulamilchpulver, enthalten sein können:

| | |
|---|---|
| Vitamin A | 1 bis 10 µg Retinoläquivalent (RÄ) |
| Vitamin D | 0,1 bis 1,0 µg |
| Vitamin B₂ | 10 bis 18 µg. |

Als Spurenelemente können Zink, Kupfer, Jod, Mangan, Silin und Eisen zugesetzt werden. Weitere Inhaltsstoffe können Mineralien sein, wie Natrium, Kalium, Calcium und Phosphor. Als Ballaststoffe können Galakto-Oligosaccharide zugesetzt werden. Calcium ist vorzugsweise in einer Menge von 8 bis 12 mg, Eisen in Menge von 0 bis 0,06 mg und Jod in einer Menge bis zu 2 µg, jeweils bezogen auf 1 g Formulamilchpulver, enthalten.

Im Rahmen der vorliegenden Erfindung ist es bevorzugt, dass die einzelnen Inhaltsstoffe als bereits für die Weiterverarbeitung geeignete Formulamilch als Fertigprodukt zugesetzt werden. Diese Vorgehensweise hat den Vorteil, dass für die gesetzliche Zulassung des erfindungsgemäßen Produktes nur die Zulassung der Formulamilch erforderlich ist. Es ist aber auch möglich, die einzelnen Inhaltsstoffe separat im Rahmen des Herstellungsverfahrens zuzugeben.

Zur Herstellung der kakaohaltigen Lebensmittelzubereitung gemäß der vorliegenden Erfindung werden Kakaobestandteile zugesetzt, die in Form von Kakaopulver oder Kakaopaste, wie sie im Handel angeboten werden, eingesetzt. Als weitere Bestandteile können Kakaobutter und andere Ölsorten, wie beispielsweise Elipe, Palmöl, Sal-Butter, Shea, Kokum gurgi, Mangokern und gegebenenfalls weitere Fettsorten und Gemische daraus eingesetzt werden. Üblicherweise liegt der Fettgehalt in der fertigen Zubereitung zwischen 20 g und 35 g, vorzugsweise zwischen 20 g und 30 g, pro 100 g Schokolade.

Zur Herstellung der erfindungsgemäßen Zubereitung werden die Kakaobestandteile mit der Formulamilch, vorzugsweise in trockener Form, und gegebenenfalls weitere Bestandteile wie Kakaobutter, Zucker, Emulgatoren (wie Lecithin), Aromastoffe etc., miteinander vermischt. Durch die Einstellung der Mengenverhältnisse von Formulamilch zu Kakaobestandteilen bestimmt sich, ob ein Vollmilch, Zartbitter oder Bitterschokolade hergestellt wird.

Um eine homogene Schokoladenmasse zu erhalten, werden die einzelnen Inhaltsstoffe in einem nächsten Schritt zu einer hochpastösen Masse fein vermahlen, um die Feststoffe auf eine durchschnittliche Teilchengröße zwischen 10 und 20 µm zu reduzieren. In einem üblichen Herstellungsverfahren aus dem Stand der Technik wird die erhaltene fein vermahlene Schokoladenmasse anschließend erwärmt und/oder gerieben, dadurch wird der Feuchtegehalt reduziert und es kommt zu einem Aromenaufschluss bzw. zum Entfernen unerwünschter Aromabestandteile. In diesem Verfahren erhält die Schokoladenmasse die gewünschte Konsistenz. Zur Herstellung von weißer Schokolade besteht der Kakaobestandteil nur aus Kakaobutter.

In einem weiteren Produktionsschritt wird die Masse in Formen abgefüllt oder als Überzugsmasse für andere Produktformen, wie Riegel etc. aufbereitet und danach abgekühlt.

In einer weiteren Ausgestaltung der vorliegenden Erfindung werden der erfindungsgemäßen Zubereitung bei Bedarf mögliche weitere Stoffe/harte Zutaten beigefügt, wie Nüsse oder andere geschmackgebende Zutaten.

Eine Beispielrezeptur für eine mögliche Ausgestaltung der vorliegenden Erfindung ist nachfolgend dargestellt:

### Rezeptur für 1 kg Milchschokolade:

750 g Schokolade mit einem Kakaoanteil von 55 % weitere Zutaten: Zucker, Kakaobohnen, Kakaobutter, Emulgator (Sojalecithin), Vanille).
250 g Kindermilch-Milchpulver enthaltend

| | |
|---|---|
| Kohlenhydrate | 140 g |
| davon Lactose | 131 g |
| Fett, davon: | |
| gesättigte Fettsäuren | 16,1 g |
| einfach ungesättigte Fettsäuren | 19,8 g |
| mehrfach ungesättigte Fettsäuren davon: | 6,8 g |
| Linolsäure (Omega-6) | 8,6 g |
| Linolensäure (Omega-3) | 1 g |
| Ballaststoffe | |
| Galaktooligosaccharide | 12,4 g |
| Mineralstoffe | |
| Calcium | 2.673 mg |
| Spurenelemente | |
| Eisen | 25 mg |
| Iod | 210 µg |
| Vitamine | |
| Vitamin A | 619 µg |
| Vitamin D | 35 µg |
| Vitamin B2 | 3.713 µg |
| Folsäure | 309 µg. |

## Patentansprüche

1. Kakaohaltige Lebensmittelzubereitung enthaltend Kakaobestandeile, Kohlenhydrate, Proteine und Fettbestandteile als Bestandteile von Formulamilch, **dadurch gekennzeichnet, dass**
die Kohlenhydrate in einer Menge von 40 bis 60 Gew.-%, bezogen auf die Trockensubstanz der Formulamilch, enthalten sind,
Proteine in einer Menge ≤ 20 Gew.-%, bezogen auf die Trockensubstanz der Formulamilch, enthalten sind, und die Formulamilch einen Fettgehalt zwischen 15 und 25 Gew.-%, bezogen auf die Trockensubstanz der Formulamilch, aufweist.

2. Kakaohaltige Lebensmittelzubereitung nach Anspruch 1, **dadurch gekennzeichnet, dass** die Kakaobestandteile in Form von Kakaopulver oder Kakaopaste enthalten sind.

3. Kakaohaltige Lebensmittelzubereitung nach Anspruch 1 oder Anspruch 2, **dadurch gekennzeichnet, dass** die Zubereitung Milchschokolade, dunkle Schokolade oder Compound-Schokolade ist.

4. Kakaohaltige Lebensmittelzubereitung nach einem der Ansprüch 1 bis 3, **dadurch gekennzeichnet, dass** die Kohlenhydrate ausgewählt sind aus Mono- und Disacchariden, wobei der Gehalt an Lactose ≥ 80 %, bezogen auf den Gehalt an Kohlenhydraten, beträgt.

5. Kakaohaltige Lebensmittelmittelzubereitung nach einem der Ansprüche 1 bis 4, **dadurch gekennzeichnet, dass** die Fettkomponente 0,1 bis 1,5 Gew.-% Omega-3-Fettsäuren, enthält.

6. Kakaohaltige Lebensmittelmittelzubereitung nach einem der vorangehenden Ansprüche, **dadurch gekennzeichnet, dass** die eingesetzte Formulamilch ein oder mehrere Vitamine, Spurenelemente, Mineralien, Prä- oder Probiotika, ungesättigte Fettsäuren und/oder Ballaststoffe enthält.

7. Kakaohaltige Lebensmittelmittelzubereitung nach Anspruch 6, **dadurch gekennzeichnet, dass** die Vitamine ausgewählt sind aus den Vitaminen A, D, E, B2, B6, B12, K und Folsäure, Pantothensäure, Biotin, Niacin, Cholin und Inositol.

8. Kakaohaltige Lebensmittelmittelzubereitung nach Anspruch 7, **dadurch gekennzeichnet, dass** die eingesetzte Formulamilch Vitamin D in einer Menge von 0,1 bis 1,0 µg, jeweils bezogen auf 1 g Formulamilchpulver, enthält.

## Claims

1. Cocoa-containing food preparation containing cocoa constituents, carbohydrates, proteins and fat constituents as constituents of formula milk, **characterized in that**
the carbohydrates are present in an amount of from 40 to 60% by weight, based on the dry matter of the formula milk,
proteins are present in an amount of ≤ 20% by weight, based on the dry matter,
and the formula milk has a fat content between 15 and 25% by weight, based on the dry matter of the formula milk.

2. Cocoa-containing food preparation according to Claim 1, **characterized in that** the cocoa constituents are present in the form of cocoa powder or cocoa paste.

3. Cocoa-containing food preparation according to Claim 1 or Claim 2, **characterized in that** the preparation is milk chocolate, dark chocolate or compound chocolate.

4. Cocoa-containing food preparation according to any of Claims 1 to 3, **characterized in that** the carbohydrates are selected from monosaccharides and disaccharides, the lactose content being ≥ 80%, based on the content of carbohydrates.

5. Cocoa-containing food preparation according to any of Claims 1 to 4, **characterized in that** the fat component contains from 0.1 to 1.5% by weight of omega-3 fatty acids.

6. Cocoa-containing food preparation according to any of the preceding claims, **characterized in that** the formula milk used contains one or more vitamins, trace elements, minerals, pre- or probiotics, unsaturated fatty acids and/or dietary fibres.

7. Cocoa-containing food preparation according to Claim 6, **characterized in that** the vitamins are selected from the vitamins A, D, E, B2, B6, B12, K and folic acid, pantothenic acid, biotin, niacin, choline and inositol.

8. Cocoa-containing food preparation according to Claim 7, **characterized in that** the formula milk used contains vitamin D in an amount of from 0.1 to 1.0 µg, based in each case on 1 g of formula milk powder.

## Revendications

1. Préparation alimentaire contenant du cacao, contenant des constituants du cacao, des glucides, des protéines et des constituants gras comme constituants de lait pour nourrissons, **caractérisée en ce que**
les glucides sont contenus en une quantité de 40 à 60% en poids, par rapport à la matière sèche du lait pour nourrissons,
les protéines sont contenues en une quantité ≤ à 20% en poids, par rapport à la matière sèche
et le lait pour nourrissons présente une teneur en matière grasse entre 15 et 25% en poids par rapport à la matière sèche du lait pour nourrissons.

2. Préparation alimentaire contenant du cacao selon la revendication 1, **caractérisée en ce que** les constituants du cacao sont contenus sous forme de poudre de cacao ou de pâte de cacao.

3. Préparation alimentaire contenant du cacao selon la revendication 1 ou la revendication 2, **caractérisée en ce que** la préparation est du chocolat au lait, du chocolat noir ou du chocolat composé.

4. Préparation alimentaire contenant du cacao selon l'une quelconque des revendications 1 à 3, **caractérisée en ce que** les glucides sont choisis parmi les monosaccharides et les disaccharides, la teneur en lactose étant ≥ 80%, par rapport à la teneur en glucides.

5. Préparation alimentaire contenant du cacao selon l'une quelconque des revendications 1 à 4, **caractérisée en ce que** le composant gras contient 0,1 à 1,5% en poids d'acides gras oméga-3.

6. Préparation alimentaire contenant du cacao selon l'une quelconque des revendications précédentes, **caractérisée en ce que** le lait pour nourrissons utilisé contient un(e) ou plusieurs vitamines, oligo-éléments, minéraux, prébiotiques ou probiotiques, acides gras insaturés et/ou fibres alimentaires.

7. Préparation alimentaire contenant du cacao selon la revendication 6, **caractérisée en ce que** les vitamines sont choisies parmi les vitamines A, D, E, B2, B6, B12, K et l'acide folique, l'acide pantothénique, la biotine, la niacine, la choline et l'inositol.

8. Préparation alimentaire contenant du cacao selon la revendication 7, **caractérisée en ce que** le lait pour nourrissons utilisé contient de la vitamine D en une quantité de 0,1 à 1,0 µg, à chaque fois par rapport à 1 g de poudre de lait pour nourrissons.
